# EUROPEAN PATENT APPLICATION

(11) **EP 1 209 787 A1**
(43) Date of publication of application: **29.05.2002**
(21) Application number: 01126846.3
(22) Date of filing: 12.11.2001
(51) Int. Cl.: H02G 3/36

(54) **Method for providing a cable outlet in an elevated floor panel with a cable protection**

(30) Priority: 22.11.2000 LU 90681
(71) Applicant: Uniflair International S.A., 1660 Luxembourg (LU)
(72) Inventor: Isaac, Eric Peter, 5335 Moutfort (LU)
(74) Representative: Schmitt, Armand

(57) **Abstract**

Method for providing a cable outlet (12) in an elevated floor panel (10), having an upper surface (26) and an opposite lower surface (28), with a cable protection comprising the following steps:
providing a flexible protection element (14) that has a generally U-shaped cross-section comprising a first flange (22), a second flange (24) and a web (20) connecting the first and second flanges (22, 24), wherein the distance between the first and second flanges (22, 24) is substantially equal to the thickness of the panel (10); and
covering the edge of the cable outlet (12) with the flexible protection element (14), wherein the first flange (22) rests on the upper surface (26) of the panel (10) and the second flange (24) rests on the lower surface (28) of the panel (10).

## Description

The present invention relates to a method for providing a cable outlet in an elevated floor panel with a cable protection.

Elevated floors are commonly used in commercial and office buildings, where substantial numbers of cables, pipes or ducts are required and where it is desirable to maintain accessibility of the latter for ease of installation, change or removal. An elevated floor assembly basically consists of floor panels supported above the base floor by pedestals. The pedestals are normally located so as to provide support at panel corners. The pedestals may be supplemented by horizontal stringer members, which form a grid to provide support along the panel sides. Cables, pipes or even air conditioning services are thus installed between the base floor and the elevated floor and are easily accessible by removing floor panels where needed. In order to pass cables from the space between the base floor and the elevated floor through the floor panels into the room, some of the floor panels have got a cable outlet arranged therein. Such cable outlets are generally an opening cut into the floor panel. For stability purposes, floor panels often comprise a metallic sheet on their lower surface. As a cable outlet is cut into such a panel, it is generally not possible to avoid sharp edges on the lower surface of the floor panel. These sharp edges can very easily damage cables, which pass through the cable outlet. In order to protect the cables from such damage, it is therefore necessary to apply a protection frame to the cable outlet. Such protection frames are available in standardized sizes and shapes.

The object of the present invention is a method for providing a cable outlet in an elevated floor panel with a cable protection that does not require to have a stock of different frame types and to limit the size and shape of cable outlets to the size and shape of different standardized frame types.

The present invention provides a method for providing a cable outlet in an elevated floor panel, having an upper surface and an opposite lower surface, with a cable protection comprising the following steps:
providing a flexible protection element that has a generally U-shaped cross-section comprising a first flange, a second flange and a web connecting the first and second flanges, wherein the distance between the first and second flanges is substantially equal to the thickness of the panel; and
covering the edge of the cable outlet with the flexible protection element, wherein the first flange rests on the upper surface of the panel and the second flange rests on the lower surface of the panel.

The flexibility of the protection element allows it to be used with any size and shape of cable outlets. The protection element is simply installed in the cable outlet by lining the edge of the cutout with the web, while the first and second flanges rest on the upper and lower surfaces of the panel. No great skill is required for installing such a protection element. Cables passing through the cable outlet are well protected against damage from sharp corners on the lower surface of the panel.

The method advantageously comprises the step of cutting the protection element to a length substantially corresponding to the perimeter of the cable outlet to be protected. The protection element can hence be supplied by the yard. Any size of cable outlet can thus have its edge coated with such a protection element.

The protection element is preferably made of flexible rubber material. It can hence be easily and cheaply produced.

The cable outlet can e.g. open into one side of the panel. This allows the panel being removed, e.g. for maintenance work in the plenum, without first having to unplug the cables running through the cable outlet.

If the cable outlet comprises at least one corner, the method advantageously comprises the step of interrupting the first and second flanges by a cut in the corner. The protection element can hence be used in square ore rectangular cable outlets as well as in rounded ones.

On its inner surface, the web can comprise a self-adhesive strip with a protection film thereon. The method then preferably comprises the step of peeling off the protection film before covering the edge of the cable outlet with the flexible protection element. The self-adhesive strip will securely maintain the web of the protection element against the edge of the cable outlet, thereby securely maintaining the protection element in the cable outlet. The flanges are pressed into contact with the upper and lower surfaces of the panel through the elasticity of the protection element.

It will be appreciated that, when providing a cable protection to a round cable outlet, the flanges of one or both of the ends of the protection element have to be cut off at an angle, so as to give the protection element a continuous look in the cable outlet.

The present invention will be more apparent from the following description of a not limiting embodiment with reference to the attached drawings, wherein
- Fig.1: is a perspective view of a floor panel with a semicircular cable outlet,
- Fig.2: is a perspective view of the protection element, and
- Fig.3: is a perspective view of another floor panel with a rectangular cable outlet.

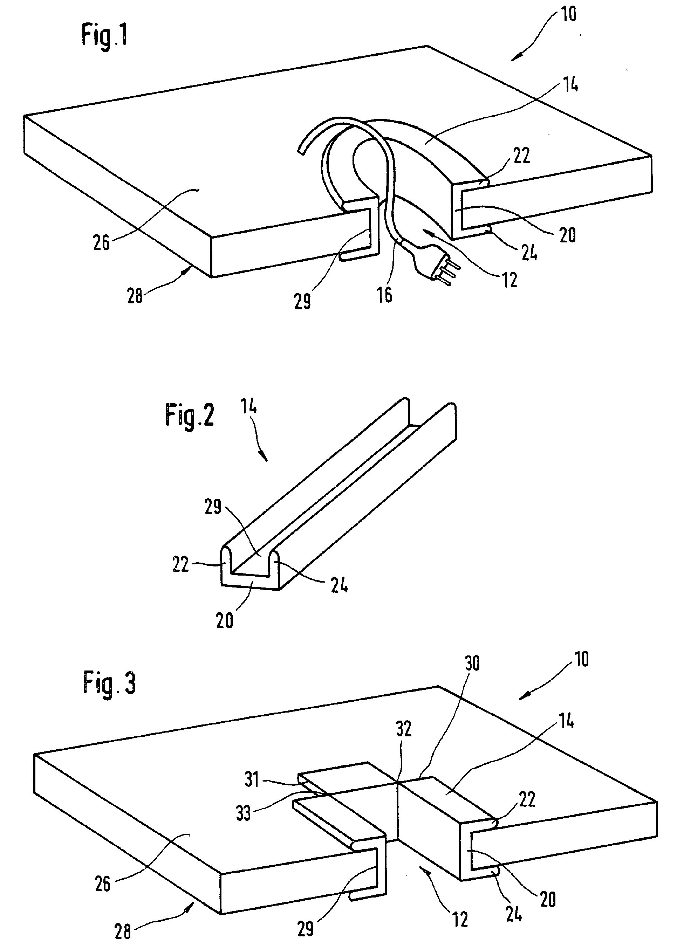

Fig.1 shows a floor panel 10 for an elevated floor having a cable outlet 12 arranged therein. A protection element 14 is mounted in the cable outlet 12. In this embodiment, the cable outlet 12 opens into the side of the panel 10. This allows the panel 10 to be removed, e.g. for maintenance work in the raised flooring, without having to unplug cables 16 passing through the cable outlet 12.

Fig.2 shows a protection element 14 before it is mounted in a cable outlet of a panel. The protection element 14 has an essentially U-shaped cross-section comprising a web 20, a first flange 22 and a second flange 24. The distance between said first and second flanges 22, 24 is substantially equal to the thickness of the panel 10. The first flange 22 rests on an upper surface 26 of the panel 10 and the second flange 24 rests on a lower surface 28 of the panel 10, while the web 20 lines the edge of the cable outlet 12. The protection element 14 is made in one piece of flexible rubber material, so that it can easily be adapted to any shape of cable outlet. The protection element 14 is cut to a length substantially corresponding to the perimeter of the cable outlet to be protected. The inner surface 29 of the web 20, i.e. the surface turned towards the first and second flanges 22, 24, is lined with a self-adhesive for maintaining the protection element 14 in place.

Whereas in Fig.1 the protection element 14 is fitted in a semicircular cable outlet, in Fig.3 it is fitted in a rectangular cable outlet 12. In order to do so, cuts 30, 31 merely have to be made in the first and second flanges 22, 24 in the corners 32, 33 of the cable outlet 12.

## Claims

1. Method for providing a cable outlet (12) in an elevated floor panel (10) with a cable protection (14), wherein said elevated floor panel (10) has an upper surface (26) and an opposite lower surface (28), **characterised by**
providing a flexible protection element (14) that has a generally U-shaped cross-section comprising a first flange (22), a second flange (24) and a web (20) connecting said first and second flanges (22, 24), wherein the distance between said first and second flanges (22, 24) is substantially equal to the thickness of said panel (10); and
covering the edge of said cable outlet (12) with said flexible protection element (14), wherein said first flange (22) rests on said upper surface (26) of said panel (10) and said second flange (24) rests on said lower surface (28) of said panel (10).

2. Method according to claim 1, comprising the step of:
cutting said protection element (14) to a length substantially corresponding to the perimeter of said cable outlet (12) to be protected.

3. Method according to claim 1 or 2, wherein said protection element (14) is made of flexible rubber material.

4. Method according to any one of the previous claims, wherein said cable outlet (12) opens into one side of said panel (10).

5. Method according to any one of the previous claims, wherein said cable outlet (12) has at least one corner (32), **characterised by**:
interrupting said first and second flanges (22, 24) by a cut (30) in said corner (32).

6. Method according to any one of the previous claims, wherein on its inner surface (29) said web (20) comprises a self-adhesive strip with a protection film thereon and wherein said method comprises the step of:
peeling off said protection film before covering the edge of said cable outlet (12) with said flexible protection element (14).
